(19) Europäisches Patentamt
European Patent Office
Office européen des brevets

(11) EP 4 368 381 B1

(12) EUROPEAN PATENT SPECIFICATION

(45) Date of publication and mention of the grant of the patent:
**13.05.2026 Bulletin 2026/20**

(21) Application number: **22315268.7**

(22) Date of filing: **09.11.2022**

(51) International Patent Classification (IPC):
***B29D 11/00*** *(2006.01)*

(52) Cooperative Patent Classification (CPC):
**B29D 11/00009; B29D 11/00326; B29D 11/00865**

(54) **METHOD FOR MANUFACTURING AN OPHTHALMIC ARTICLE HAVING AT LEAST ONE MICROSTRUCTURED SURFACE, AND OPHTHALMIC ARTICLE THUS OBTAINED**

VERFAHREN ZUR HERSTELLUNG EINES OPHTHALMISCHEN ARTIKELS MIT MINDESTENS EINER MIKROSTRUKTURIERTEN OBERFLÄCHE UND SO ERHALTENER OPHTHALMISCHER ARTIKEL

PROCÉDÉ DE FABRICATION D'UN ARTICLE OPHTALMIQUE AYANT AU MOINS UNE SURFACE MICROSTRUCTURÉE, ET ARTICLE OPHTALMIQUE AINSI OBTENU

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**15.05.2024 Bulletin 2024/20**

(73) Proprietor: **Essilor International**
**94220 Charenton-Le-Pont (FR)**

(72) Inventors:
- **BIVER, Claudine**
  **31320 Vigoulet Auzil (FR)**
- **CANO, Jean-Paul**
  **31650 Lauzerville (FR)**

(74) Representative: **Plasseraud IP**
**104 Rue de Richelieu**
**CS92104**
**75080 Paris Cedex 02 (FR)**

(56) References cited:
**EP-A1- 3 640 714**
**EP-A1- 4 091 805**
**WO-A1-00/66353**
**WO-A1-2008/114893**
**WO-A1-2021/209527**
**WO-A1-2021/255007**
**US-B2- 9 709 819**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### FIELD OF THE INVENTION

The present invention relates to a method for manufacturing an ophthalmic article having at least one microstructured surface, and to an ophthalmic article obtained by this method. The invention particularly applies to an ophthalmic lens comprising a three-dimensional array of micro-lenses configured to control evolution of myopia when the ophthalmic article is an ophthalmic curved prescription lens, even though the ophthalmic article may alternatively be incorporated into a smart eyewear device.

### DESCRIPTION OF RELATED ART

Ophthalmic articles such as lenses generally comprise a base-lens substrate which is shaped in order to provide a desired optical power, and an abrasion-resistant coating (also known as anti-abrasion or hard coating) covering at least one surface of the base-lens substrate to prevent the latter from being damaged by scratches.

For a number of applications, it has been found desirable to provide on the base-lens substrate a plurality of micro-lenses, providing a local change of the power of the optical article. For instance, it is known from US 2017/0131567 A1 a lens comprising a plurality of microlenses formed on a surface of the lens, the local change of power provided by the micro-lenses enabling to slow down the progress of myopia.

Micro-lenses arrays are thus used for adding defocusing effect on a periphery of an ophthalmic corrective lens to control the evolution of myopia on kids. Indeed, some ophthalmic lenses are today specially designed and manufactured for that purpose. Nonetheless, this approach limits the extension of this technology to some materials, and the specific manufacturing process - which typically involves molds - induces extra costs and investments.

Existing molding processes of micro-lenses indeed require to protect the delicate microlenses surface with another covering material, and involve the conception and manufacturing of expensive and delicate molds. Specifically, such known processes typically inject a thermoplastic or thermosetting resin into a master mold containing a surface replication of the micro-lens array in an inverted profile. To protect the micro-lens array and guaranty a prolonged ophthalmic effect for the ophthalmic article, the molded micro-lenses are covered in a subsequent manufacturing step with the above-mentioned covering material, which results in that the focal lens defined by the micro-lens array is corrected due to the refractive index of the specific covering material. Further, this subsequent step is particularly delicate to control.

Apart from the fact that known molding. manufacturing processes of prescription ophthalmic lenses are complex and costly, another drawback of these processes is that they are not versatile and limit the range of the molded ophthalmic articles that may be obtained, inasmuch as such processes cannot be easily implemented for all ophthalmic lens materials.

WO 2020/078964 A1 relates to an optical article comprising

- a base lens substrate, having a front surface and a back surface,
- an abrasion resistant coating covering at least one of said front surface and said back surface, the abrasion resistant coating having a first surface at the interface with the base lens substrate and a second surface opposite the first, and
- at least one optical element protruding from one of the first and second surfaces of said abrasion resistant coating, said optical element being composed of a material adapted to form an abrasion resistant coating and which may be formed of the same abrasion resistant coating by additive manufacturing, photolithography, thermal embossing or injection molding.

The article of Daniel M. Hartmann, Osman Kibar, and Sadik C. Esener, Characterization of a polymer microlens fabricated by use of the hydrophobic effect, July 1, 2000 / Vol. 25, No. 13 / OPTICS LETTERS 975, relates to means of fabricating hydrophilic domains in a hydrophobic background by lithographically patterning an adhesive hydrophobic layer. Polymer micro-lenses were fabricated by use of a dip-coating technique on a variety of mineral substrates ($SiO_2$, SiN, Ga As, InP, etc.), ranging in size from 2 $\mu$m to 500 $\mu$m in diameter.

It is to be noted that this article concerns optical systems in optics-based applications, but does not disclose an ophthalmic article, such as an ophthalmic lens or an eyewear article.

WO 2021/209527 A1 discloses a method for manufacturing an ophthalmic article having a front main surface and a rear main surface, at least one of which is a microstructured surface.

### SUMMARY OF THE INVENTION

An object of the invention is to overcome at least the above-mentioned drawbacks, by providing a method for manufacturing an ophthalmic article having a front main surface and a rear main surface, at least one of which is a microstructured surface, by a simple additive process allowing to provide existing ophthalmic article of any material and

geometry, such as curved prescription lenses, with an array of micro-lenses having a high mechanical resistance, so as in particular to simplify the delivery of a full range of myopia controlling lenses without changing the underlying lens blank, nor the supply chain of finished lenses.

According to the invention, this manufacturing method comprises the following steps:

a) Providing an ophthalmic substrate with a substrate surface which is either hydrophobic or hydrophilic;

b) Patterning the substrate surface to create thereon a surface wettability pattern comprising a two-dimensional array of mutually distant hydrophilic micro-areas and of at least one hydrophobic zone which separates the hydrophilic micro-areas from each other;

c) Coating the two-dimensional array with a hydrophilic liquid which is able to form an abrasion-resistant coating in a dried and/or cured state, to form mutually distant droplets of the hydrophilic liquid which are anchored to the hydrophilic micro-areas by wettability thereof; and

d) Drying and/or curing (e.g. by UV or thermal curing) the mutually distant droplets of the hydrophilic liquid, to generate therefrom a three-dimensional array of micro-lenses forming the at least one microstructured surface.

It is to be noted that this "post manufacture" according to the invention of the array of micro-lenses onto the front main surface and/or the rear main surface of the ophthalmic article, by means of the addition of the abrasion-resistant coating in steps c) and d), is fully compatible with the prescription organization and technology standards.

It is also to be noted that the manufacturing method of the invention allows to create a pattern of micro-lenses array on an existing ophthalmic article, such as a prescription lens, without changing the manufacturing process of the lens, which may be made of any lens material and may have any geometry, as explained above. As a consequence, the whole process may advantageously be implemented at a lower cost and allows late personalization of the micro-lenses, compared to existing processes.

It will also be noted that a major advantage of the manufacturing method of the invention is that the array of micro-lenses may be made of any existing abrasion-resistant (i.e. hardcoat) material with a high mechanical resistance, so that these micro-lenses do not require any other protection layer thereon (even though an additional layer, such as an antireflection coating *inter alia,* may optionally be applied onto the outer surface of the micro-lenses).

It will further be noted that in the case of a mineral ophthalmic substrate, the surface of the mineral ophthalmic substrate may be rendered either hydrophobic or hydrophilic by an appropriate treatment, and that steps b), c) and d) above may be applied to any mineral or organic ophthalmic substrate in the uncoated state (to either a "neat substrate" or a modified substrate surface), provided that the ophthalmic substrate has an abrasion resistance which is high enough.

According to a first embodiment of the invention, step a) comprises rendering the ophthalmic substrate, which consists of a mineral material, either hydrophobic or hydrophilic on said substrate surface (i.e. without necessarily providing in step a) the ophthalmic substrate with a separate hydrophilic or hydrophilic coating).

According to a second embodiment of the invention, step a) comprises providing the ophthalmic substrate, which consists of an organic material, with a first abrasion-resistant coating which is either hydrophobic or hydrophilic and defines said substrate surface, and the abrasion-resistant coating which forms the micro-lenses after steps c) and d) thus represents a second abrasion-resistant coating.

Thickness of said first abrasion resistant coating ranges generally from 1 micrometer to 10 micrometers, preferably from 2 to 6 micrometers.

It may be noted that such a first abrasion-resistant coating may also be applied to a mineral ophthalmic substrate, although not being necessary.

As detailed below, it will further be noted that the three-dimensional array of microlenses obtained in step d) according to the above first and second embodiments may be removable, for instance by dipping in an appropriate removing bath while protecting the first abrasion-resistant coating, so as to selectively recover the ophthalmic substrate coated with the first abrasion-resistant coating. This may advantageously allow to recoat the ophthalmic substrate provided with the first abrasion-resistant coating with another three-dimensional array of micro-lenses, in order to change the optical properties of the ophthalmic article according to the evolution of the wearer's myopia. This may also be useful in case of a low yield obtained during the creation of the first three-dimensional array of microlenses, because its removal will allow a second pass which is hardly feasible for polymeric microlenses made by an injection process.

According to another feature of the above second embodiment of the invention, in step c) the hydrophilic liquid may be selected so that the second abrasion-resistant coating forming the micro-lenses has a Bayer value preferably greater than or equal to the Bayer value of the first abrasion-resistant coating, both Bayer values being measured in accordance with the ASTM F735-81 standard and being preferably greater than or equal to 2, more preferably of between 3 and 25 and even more preferably of between 4 and 15, depending of the materials used for the second abrasion-resistant coating.

This gradient in Bayer values between the first and second abrasion-resistant coatings particularly allows to impart a satisfactory mechanical resistance to the micro-lenses.

Advantageously according to any of the preceding features according to the above first and second embodiments, in step c) the hydrophilic liquid may be a polar liquid selected from solutions in a polar solvent and emulsions comprising a polar phase.

It will be noted that these solutions or emulsions in polar solvents, which may be highly polar, include a mixture of highly polar liquids, and that such an exemplary hydrophilic liquid may contain a low quantity of water.

It will also be noted that the hydrophilic liquid may be further selected to exhibit a low enough viscosity and a high enough surface tension, which are configured to minimize viscous drag forces and maximize capillary forces in order to oppose wetting of the at least one hydrophobic zone by the hydrophilic liquid.

It will further be noted that the hydrophilic liquid composition may be further selected based upon the desired refractive index for the array of micro-lenses.

Preferably, according to the above first and second embodiments the hydrophilic liquid used in step c) comprises at least one inorganic oxide of a metal or non-metal selected from colloidal silica, titania, zirconia, antimony oxide and mixtures or composite oxide(s) thereof, and the hydrophilic liquid is selected from polar solutions comprising alcoholic, ketones and/or ester solvents, the hydrophilic liquid comprising a silane or alkoxysilane hydrolysate/ condensate, the at least one inorganic oxide and a catalytic amount of a curing catalyst preferably selected from aluminum-based catalysts and organometalllic complexes of zirconium, titanium, iron or nickel.

Alternatively, the hydrophilic liquid composition may be devoid of colloidal oxide particles. In this case, the hydrophilic liquid composition may essentially contain silane or alkoxysilane hydrolysates/ condensates in polar solvents.

The hydrophilic liquid more preferably comprises an epoxytrialkoxysilane and dialkyldialkoxysilane hydrolysate/ condensate, a colloidal silica and a catalytic amount of the curing catalyst. Exemplary usable compositions are disclosed in document FR2702486 A1 or its equivalent US 2003/165698 A1, and also in WO 2020/078964 A1. The remainder of the hydrophilic liquid composition may be essentially composed of solvents conventionally used for the formulation of such hydrophilic liquids. Still more preferably, the hydrolysate/ condensate is a γ-glycidoxypropyltrimethoxysilane (GLYMO) and dimethyldiethoxysilane (DMDES) hydrolysate/ condensate, or else a GLYMO and triethyl orthosilicate (TEOS) hydrolysate/ condensate.

The exemplary aluminum-based curing catalyst may be selected from aluminum chelates or compounds with one of the two following formulae (I) or (II):

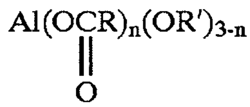

(I)

$(R'O)_{3-n}Al(OsiR''_3)_n$ (II)

wherein:

- R and R' are linear or branched alkyl groups with 1 to 10 carbon atoms,
- R" is a linear or branched alkyl group with 1 to 10 carbon atoms, a phenyl group, a

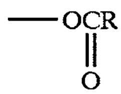

group where R has the meaning given above,
- and n is a whole number from 1 to 3.

An aluminum chelate knowingly is a compound formed by reacting an aluminum alcoholate or acylate with nitrogen- and sulphur-free sequestrating agents which contain oxygen as the coordinating atom.

The aluminum chelate is preferably selected from compounds having formula (III):

$AlX_vY_{3-v}$ (III)

wherein:

- X is an OL group where L is an alkyl group with 1 to 10 carbon atoms,

- Y is at least one coordinating product obtained from a compound having formula (1) or (2) below:

$$M^1COCH_2COM^2 \quad (1)$$

$$M^3COCH_2COOM^4 \quad (2)$$

wherein:
$M^1$, $M^2$, $M^3$ and $M^4$ are alkyl groups with 1 to 10 carbon atoms, and v takes the value 0, 1 or 2.

Examples of compounds having formula (III) are aluminum acetylacetonate, aluminum ethylacetoacetate bisacetylacetonate, aluminum bisethylacetoacetate acetylacetonate, aluminum di-n-butoxide monoethylacetoacetate and aluminum diisopropoxide monomethylacetoacetate.

Preferred compounds having formula (I) or (II) are those where R' is an isopropyl or ethyl group and R and R" are methyl groups.

One or more compounds having formula (I), (II) or (III) can be used as the aluminum-based curing catalyst, which catalyst may be used in a proportion which will harden the hydrophilic liquid over a period of a few hours at temperatures in the order of 100°C, generally in a proportion of 0.1% to 5% by weight of the hydrophilic liquid composition.

According to a preferred embodiment of the invention common to the above first and second embodiments, step c) is implemented via dip coating, by dipping the ophthalmic substrate provided with the substrate surface once patterned (therefore provided with the first abrasion-resistant coating, according to the second embodiment) into a bath of the hydrophilic liquid and afterwards by a controlled withdrawal of the dipped ophthalmic substrate from the bath, the withdrawal being controlled so as to obtain a desired curvature radius and/or volume for each of the micro-lenses obtained in step d). Indeed, the curvature radius of each droplet is a consequence of the droplet volume, which is itself directly linked to the withdrawal speed, assuming that this speed is inferior to a critical speed. Besides, the droplet volume also depends upon the dimensions of each hydrophilic micro-area and of the at least one zone created in step b).

It is to be noted that this dip coating technique is preferred for coating the two-dimensional array with the hydrophilic liquid, even though other coating techniques such as spin coating, spray coating or roll coating may alternatively be used.

In the dip coating preferably implemented in step c), a maximum allowable withdrawal speed may be determined, by measuring a critical transition speed where no film of the hydrophilic liquid is dragged onto the at least one hydrophobic zone once dipped and withdrawn, and the controlled withdrawal of the dipped ophthalmic substrate from the bath is implemented at an adjusted withdrawal speed selected to be lower than or equal to said critical transition speed.

According to general features of the invention which may relate to any of the preceding ones, including the above first and second embodiments, and particularly when step c) is implemented by dip coating, steps b) and c) may be implemented so that the micro-lenses obtained in step d) have:

- at least one greater transverse direction, such as a diameter, which is greater than 500 $\mu$m and preferably of between 1 mm and 2 mm in case the micro-lenses are designed for controlling evolution of myopia when the ophthalmic article is an ophthalmic curved prescription lens; and/or
- at least one shape selected from spherical, cylindrical, ellipsoidal and combinations thereof, even though there is no limitation for the obtained shape(s) of the micro-lenses; and/or
- various refractive indexes and/or various colors, and may optionally be hazy.

It is to be noted that the shape and size of the droplets anchored in step c) of the method of the invention determine the radius and focal parameter of the array of micro-lenses, after subsequent drying and/or curing in step d). Indeed, the final shape of the droplets is different from the droplets shape immediately after said withdrawal, due to evaporation of the solvent used in the abrasion-resistant coating for the droplets. Furthermore, the dry content of this coating liquid may also be a control parameter of the final geometry of the micro-lenses.

It is also to be noted that variations from the conventional spherical shape of the microlenses may be easily obtained by varying the geometry of the hydrophilic micro-areas in step b), including different sizes and/or shapes which may be easily combined for the micro-lenses obtained on a same surface in step d), leading for instance to astigmatic micro-lenses and/or to micro-lenses of different optical powers (e.g. two types of spherical micro-lenses in order to create two optical powers).

According to general features of the invention which may relate to any of the preceding ones, including the above first and second embodiments, and particularly when step c) is implemented by dip coating:

- the ophthalmic substrate may consist of a mineral material, or of an organic material which is thermosetting, photocurable or thermoplastic; and

- the method may further comprise at least one of steps A) and B) below:

  A) coating the ophthalmic substrate before step a) with a primer coating which is itself coated with said substrate surface (i.e. coated with the first abrasion-resistant coating in the second embodiment), and
  B) laminating the ophthalmic substrate provided with the patterned substrate surface on an existing curved lens (for instance based on either a thermoplastic or thermosetting material and already including or not an abrasion-resistant coating), by a forming technique implemented by laminating

- between step b) and step c), the ophthalmic substrate provided with said substrate surface patterned according to the surface wettability pattern, or
- after step d), the ophthalmic substrate provided with the patterned substrate surface (i.e. with the patterned first abrasion-resistant coating in the second embodiment) and the three-dimensional array of micro-lenses.

In the second embodiment, could be alternatively implemented as a variant of step B), between step a) and b), the lamination of the ophthalmic substrate provided with the first abrasion resistant coating, not yet patterned.
Also in relation to the second embodiment, the first abrasion-resistant coating may be selected from solutions comprising at least one inorganic oxide selected from metal and non-metal oxides.
By way of thermoplastic material usable for the ophthalmic substrate, mention may be made e.g. of polyamides, polyimide, polysulfones, polycarbonates and copolymers thereof, polyethylene terephtalate and (meth)acrylic (co) polymers, particularly polymethylmethacrylate (PMMA). Mention may also be made of cyclic olefin copolymers (COC), cyclic olefin polymers (COP) and also cellulose acetate, such as tricellulose acetate (TAC).
By way of thermosetting materials usable for the ophthalmic substrate, mention may be made e.g. of:

- homopolymers and copolymers of allyl carbonates of linear or branched aliphatic or aromatic polyols, such as homopolymers of diethylene glycol bis(allyl carbonate) (CR 39®),
- homopolymers and copolymers of (meth)acrylic acid and esters thereof, which are optionally derived from bisphenol A,
- homopolymers and copolymers of thio(meth)acrylic acid and esters thereof,
- homopolymers and copolymers of allyl esters which are optionally derived from bisphenol A or phthalic acids, and allyl aromatics such as styrene,
- copolymers of urethane and thiourethane,
- homopolymers and copolymers of epoxy, and
- homopolymers and copolymers of sulfide, disulfide and episulfide;

Examples of substrates usable in the present invention include those obtained from MR6®, MR7®, MR8®, MR174 ® and MR10® resins (thermosetting polythiourethane resins), CR39® and Trivex®.
As for the first abrasion-resistant coating which is used in the above second embodiment of an organic ophthalmic substrate (this coating being optional in the above first embodiment of a mineral ophthalmic substrate), it may consist of a composition similar to that described above for the hydrophilic liquid designed to form the second abrasion-resistant coating, i.e. in which the metal or non-metal oxide is selected from colloidal silica, titania, zirconia, antimony oxide and mixtures thereof, the first abrasion-resistant coating deriving from a polar solution comprising alcoholic, ketones and/or ester solvent and comprising an epoxysilane hydrolyzate, the at least one inorganic oxide and a catalytic amount of a curing catalyst, preferably an aluminum-based curing catalyst which may be selected from one of the above formulae (I), (II) or (III). Nonetheless, the first abrasion-resistant coating is preferably selected so as to exhibit a Bayer value greater than or equal to 2 and preferably lower than or equal to the Bayer value of the second abrasion-resistant coating, both values being measured according to ASTM F735-81.
Regarding the optional supplemental steps A) and B) mentioned above, it may be noted that:

- step A) of coating the ophthalmic substrate before step a) with a primer coating with a high surface tension may allow to improve adhesion of the abrasion-resistant coating on some substrates and to confer also an impact resistance on the finished ophthalmic article; and that
- step B) may include the case where the micro-lenses are made of a film obtained by the sequence of steps a) to d), this film being afterwards laminated on an existing ophthalmic article which may optionally already be provided with an abrasion-resistant coating (e.g. laminated on. a curved prescription lens bearing a hardcoat or not).

According to another general feature of the invention which may relate to any of the preceding ones, including the above first and second embodiments, and particularly when step c) is implemented by dip coating, the method may further comprise the following steps:

e) removing the three-dimensional array of micro-lenses obtained in step d) by dipping in a removing bath and optionally providing said substrate surface (i.e. the first abrasion-resistant coating in the second embodiment) with protective masking means, so as to selectively recover the ophthalmic substrate provided with the substrate surface, and

f) implementing at least once the sequence of steps c) and d) and optionally of step b) firstly, to obtain another three-dimensional array of micro-lenses forming the at least one microstructured surface (indeed, step b) may not be necessarily implemented again in step f), if the removal of the micro-lenses leads to a surface having hydrophilic properties).

It may be noted that depending upon the respective compositions of the first and second abrasion-resistant coatings, the dipping in said removing bath may undesirably remove both coatings as may particularly be the case in a caustic bath (which is usable inter alia for said removing bath), hence said protective masking means in order to protect the first abrasion-resistant coating during this dipping e.g. in a caustic bath, to remove only the second abrasion-resistant coating. Nonetheless, it may be desirable to remove both coatings, in case the first abrasion-resistant coating has been damaged. Then, it is possible to implement again the whole process.

It may also be noted that said protective masking means may be subsequently kept to apply another array of micro-lenses in step f).

According to another general feature of the invention which may relate to any of the preceding ones, including the above first and second embodiments, and particularly when step c) is implemented by dip coating, step a) may be implemented by using, by way of the ophthalmic substrate provided with said substrate surface (i.e. with the first abrasion-resistant coating in the second embodiment), an ophthalmic lens selected from a finished ophthalmic lens and an ophthalmic lens blank optionally edged, preferably an ophthalmic curved prescription lens.

According to another general feature of the invention which may relate to any of the preceding ones, including the above first and second embodiments, and particularly when step c) is implemented by dip coating, step b) may be implemented by a mask-assisted or maskless technique selected from chemical etching, laser ablation or etching (in maskless laser etching, the pattern is digitally created by laser scanning of the surface), low pressure or atmospheric plasma or corona etching, UV or ozone etching and Reactive Ion Etching (RIE), chemical grafting of molecules bearing hydrophilic or hydrophobic functions, to create the hydrophilic micro-areas and the at least one hydrophobic zone on the substrate surface (i.e. on the first abrasion-resistant coating in the second embodiment).

Step b) may be implemented by a mask-assisted technique by

(i) patterning said substrate surface (i.e. the first abrasion-resistant coating in the second embodiment) which is selected to be hydrophobic, preferably by a chemical etching technique assisted with a flexible mask applied under pressure onto the substrate surface or by

(ii) beforehand providing in step a) the substrate surface (i.e. the first abrasion-resistant coating in the second embodiment) with an outer surface which is either already hydrophilic or is rendered hydrophilic between steps a) and b), and creating in step b) the at least one hydrophobic zone via said mask-assisted technique by treating unmasked areas with said molecules bearing hydrophobic functions.

Alternatively, step b) may preferably be implemented by a maskless surface ablation technology which uses a power laser scanning (e.g. an Excimer laser, with picosecond or femto second technologies) or by a maskless technology (such as photolithography), instead of a technology using a contact or projected image mask.

More preferably, according to the second embodiment, step b) is implemented in case (i) by providing the flexible mask with an array of through micro-holes optionally having different shapes and/or dimensions, the through micro-holes preferably having a diameter of between 1 mm and 2 mm, and by immersing the first abrasion-resistant coating in a caustic bath of NaOH or KOH, and

in case (ii), the outer surface of the first abrasion-resistant coating may advantageously be rendered hydrophilic between steps a) and b) by:

- at least one of chemical etching, laser ablation or etching, low pressure or atmospheric plasma or corona etching, UV or ozone etching and Reactive Ion Etching (RIE), and chemical grafting of molecules bearing hydrophilic functions, or by
- depositing onto the first abrasion-resistant coating layer a hydrophilic layer comprising at least one inorganic oxide of a metal or non-metal selected from silica, titania, zirconia, antimony oxide and mixtures thereof.

It may be noted that in case (ii) above, the same pattern of hydrophilic micro-areas and hydrophobic zone may be created as starting from a hydrophobic first abrasion-resistant coating, by using or rendering the outer surface of the first abrasion-resistant coating totally hydrophilic for instance by:

- initially using a hydrophilic material for the first abrasion-resistant coating; or by
- a mask-assisted or maskless technique selected from chemical etching, laser ablation or etching, low pressure or atmospheric plasma or corona etching, UV or ozone etching, RIE and chemical grafting of molecules bearing hydrophilic functions, or by
- adding said hydrophilic layer for example of silica or titanium oxide.

So, case (ii) above could be useful for instance if the first abrasion-resistant coating was not hydrophobic enough to create, according to case (i) above, enough wettability contrast between the hydrophilic micro-areas and the at least one hydrophobic zone. Alternatively, case (i) may be implemented by firstly adding in step a) a specific highly hydrophobic coating to the slightly hydrophobic first abrasion-resistant coating, so as to increase the wettability contrast in step b).

An ophthalmic article according to the invention is obtained by a method as defined above, the ophthalmic article having a front main surface and a rear main surface, at least one of which being a microstructured surface, and the ophthalmic article comprises:

- an ophthalmic substrate provided with a patterned substrate surface (i.e. with the first abrasion-resistant coating in the second embodiment) which is patterned according to a surface wettability pattern comprising mutually distant hydrophilic micro-areas and of at least one hydrophobic zone which separates the hydrophilic micro-areas from each other, the ophthalmic substrate preferably being organic, and
- a three-dimensional array of micro-lenses which form the at least one microstructured surface and are respectively anchored to the sole hydrophilic micro-areas, the micro-lenses being based on an abrasion-resistant coating which coats the patterned substrate surface.

In case the ophthalmic substrate consists of an organic material according to the second embodiment, said substrate surface being defined by a first abrasion-resistant coating . which is patterned according to said surface wettability pattern, said abrasion-resistant coating forms a second abrasion-resistant coating which coats the patterned first abrasion-resistant coating and which preferably has a Bayer value greater than or equal to the Bayer value of the first abrasion-resistant coating, both Bayer values being measured in accordance with the ASTM F735-81 standard.

Advantageously, the ophthalmic article may be selected from:

- ophthalmic lenses, including finished ophthalmic lenses and ophthalmic lens blanks optionally edged, preferably curved prescription lenses for controlling evolution of myopia, in which the micro-lenses have at least one shape selected from spherical, cylindrical, ellipsoidal and combinations thereof and at least one greater transverse direction, such as a diameter, which is greater than 500 $\mu$m and preferably of between 1 mm and 2 mm, and
- smart eyewear devices.

As explained above, an ophthalmic article according to the invention, such as an ophthalmic lens for spectacle glasses, may include micro-lenses which may have various refractive indexes and/or various colors, which may optionally be hazy and which may be coated with various coatings, such as at least one coating for example selected from antireflective coatings, antistatic coatings, conductive coatings, antifog coatings, anti-smudge coatings, photochromic coatings, electrochromic coatings, polarized coatings and combinations thereof.

It will be noted that the ophthalmic article may not only be a corrective lens usable to treat or control myopia, but also to treat or control hyperopia, astigmatism and/or presbyopia.

## DESCRIPTION OF DRAWINGS

Figure 1 is a schematic side view of a hydrophilic micro-area illustrating the theory of total wetting of the area by a hydrophilic liquid;

Figure 2 is a schematic side view of a partially hydrophobic zone illustrating the theory of partial wetting of the zone by a hydrophilic liquid, by showing the contact angle $\theta_c$ as a function of the solid-vapor, solid-liquid and liquid-vapor interfacial energies $\gamma_{SG}$, $\gamma_{LS}$ and $\gamma_{LG}$, respectively;

Figure 3 is a schematic side view of a highly hydrophobic zone illustrating a poor wetting of the zone by a hydrophilic liquid shown by a contact angle greater than 90°;

Figure 4 is a schematic side view of a surface wettability pattern according to the invention comprising a two-dimensional array of a hydrophobic zone and hydrophilic micro-areas, which are coated with a hydrophilic liquid forming mutually distant droplets anchored to the hydrophilic micro-areas by total wettability thereof;

Figure 5 is a schematic top view of a droplet of hydrophilic liquid surrounded by the hydrophobic zone, the droplet being

configured to form a non-axisymmetric micro-lens;

Figure 6 is a diagrammatic representation for sag calculation of hemispherical microlenses for controlling myopia that may be formed according to the invention, based on the radius of curvature R and the diameter d of a micro-lens;

Figure 7 is a diagrammatic representation for visualizing and measuring advancing and receding contact angles $\theta_a$ and $\theta_r$ when implementing a dip coating technique in step c) of the manufacturing method of the invention, illustrating three configurations a to c;

Figures 8a, 8b and 8c diagrammatically show three different regimes appearing when the withdrawing speed U from a dip coating bath continuously increases from figure 8a to figure 8c, only figure 8a with U lower than a critical speed Uc being according to the invention;

Figure 9 is a diagrammatic representation showing an exemplary embodiment for implementing steps a) and b) of the method of the invention applied to a hydrophobic first abrasion-resistant coating via a mask-assisted etching technique to obtain the surface wettability pattern comprising the two-dimensional array;

Figure 10 is a diagrammatic representation showing an exemplary embodiment for implementing step c) of the method of the invention by dip coating and withdrawing the two-dimensional array obtained in figure 9 in and from a hydrophilic liquid;

Figure 11 is a photograph of a mask usable in the mask-assisted etching technique of . step b), made of a flexible plastic film provided with a pattern of micro-holes, which mask is laminated on a flat lens;

Figure 12 is a photograph of another mask usable in the mask-assisted etching technique of step b), made of a flexible plastic film provided with a pattern of micro-holes, which mask is laminated onto a curved surface of an ophthalmic lens blank; and

Figure 13 is a photograph of a curved ophthalmic lens incorporating a threedimensional array of micro-lenses obtained by a mask and method according to the invention.

## DETAILED DESCRIPTION OF THE INVENTION

In the present description, the terms "comprise" (and any grammatical variation thereof, such as "comprises" and "comprising"), "have" (and any grammatical variation thereof, such as "has'' and "having"), "contain" (and any grammatical variation thereof, such as "contains" and "containing"), and "include" (and any grammatical variation thereof, such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about." Also unless otherwise indicated, the indication of an interval of values « from X to Y » or "between X to Y", according to the present invention, means as including the values of X and Y.

## Total and partial wetting of hydrophilic and hydrophobic areas/ zones of a surface

As shown in figures 1 and 2, a hydrophilic liquid covering a totally (figure 1) or partially (figure 2) wettable area can be described thermodynamically by the wetting parameter S, with S= $\gamma_{SG} - \gamma_{LG} - \gamma_{LS}$, where $\gamma_{SG}$, $\gamma_{LS}$ and $\gamma_{LG}$ represent the solid-vapor, solid-liquid and liquid-vapor interfacial energies, respectively.

When S>0 in the total wetting case of figure 1, the liquid completely spreads on the surface with a macroscopic contact angle equal to zero, whereas when S<0 in the partial wetting case of figure 2, the liquid only partially spreads on the surface and forms a droplet with a macroscopic contact angle $\theta$ less than 90°. The macroscopic contact angle $\theta$ is a common measure of the surface ability to be partially wetted or totally wetted by a liquid, and the wetting parameter S only depends upon the interfacial surface energy of the system.

When the contact angle is lower than 90°, preferably lower than 80°, more preferably lower than 70°, the surface is said to be hydrophilic, being almost totally wettable when the contact angle is lower than e.g. 20°, as is the case for each hydrophilic micro-area patterned in step b) and coated in step c) according to the method of the invention.

But when the contact angle is greater than 90°, the surface is said to be non-wettable (i.e. hydrophobic), although physically it is a partial wetting (super repellent or non-wettable surfaces typically have a contact angle higher than 120°), as is the case shown in figure 3 for the at least one hydrophobic zone connecting the hydrophilic micro-areas to each other.

Figure 4 shows an exemplary surface wettability pattern obtained in step b) according to the invention, this pattern comprising mutually distant hydrophilic micro-areas 1 which are each configured to from a droplet D after step c), and at least one hydrophobic zone 2 which connects the hydrophilic micro-areas 1 to each other, so as to form a two-dimensional array 3 and the resulting pattern. When increasing the volume of each droplet D, the contact line is blocked by

the hydrophilic frontier between the micro-areas 1 and the zone 2 until it reaches a limit contact angle $\theta_c$ where the droplet D starts to spread beyond the frontier.

This limit contact angle $\theta_c$ gives the maximum curvature radius of each micro-lens, considering a base diameter and assuming a perfectly spherical shape for each droplet D.

If the droplet base diameter is below twice the capillary radius $l_c$, then the shape of each droplet D is not affected by gravity:

$$l_c = \sqrt{\frac{\gamma}{(\rho g)}}$$

The capillary radius is generally about 1 mm, and the droplet diameter according to the invention is below 2 mm when the droplets are spherical, since their shape is dominated by capillary forces. A droplet diameter of more than 2 mm may be slightly flattened by gravity, and is therefore not preferred in the present invention.

## Dynamic formation of droplets by the dip coating technique

The formation of droplets on the surface wettability pattern 3 obtained in step b), which comprises the hydrophilic micro-areas 1 and the at least one hydrophobic zone 2 on the first abrasion-resistant coating, occurs during withdrawal of this pattern 3 from the bath of hydrophilic liquid, after which the at least one hydrophobic zone 2 remains dry and the droplets D are finally anchored to the hydrophilic micro-areas 1.

On the partially wettable zone (hydrophobic zone 2, hence S <0), the maximum speed of withdrawal is related to the transition speed U. When the viscous dragging forces are higher than the capillary force, the contact line is no more stable, and the metastable created film may lead to an uncontrolled dewetting from the hydrophobic zone. This situation, which is not controllable and cannot provide a satisfactory control of the uniformity of the droplets volume, is avoided in the present invention as explained below.

To implement step c) in the method of the invention, advancing and receding contact angles (which are distinct and define a contact angle hysteresis by the difference between them) during dip coating are taken into account and measured, as explained in figure 7. Specifically, dip coating involves a receding contact angle, which receding contact angle is measured with a common apparatus (for instance by a needle as visible in both intermediate drawings of figure 7, or by a tilting technique as visible in bottom drawing c of figure 7).

This contact angle should be high enough to leave the hydrophobic zone totally not wetted after a slow withdrawing of the patterned surface 3 from the bath of hydrophilic liquid. Indeed, for a partially wetting liquid, two regimes exist depending upon complex fluid mechanic physics:

- if the surface 3 is totally dry,then no liquid film is drained onto the surface; or
- the surface.3 drains the liquid, which then undesirably either forms a continuous film or breaks into small droplets.

According to the invention, in order to successfully form the array of micro-lenses in steps c) and d), the partially wettable portion (i.e. the hydrophobic zone 2) must be left dry after dip coating, and the inventors have established to this occurred only below a determined transition speed that cannot be easily predicted but was easily measured.

Qualitatively, the inventors checked that the higher the contact angle was on the partially wettable portion or hydrophobic zone 2, the higher the withdrawal transition speed was allowed. For productivity, highcontact angles (greater than 70°, preferably greater than 80°, more preferably greater than 90°, even better greater than or equal to either of the following values 95° and 100°) are preferred, but are not absolutely required for the hydrophobic zone 2.

Because a liquid film was only formed locally on the surface of the wettable areas, the withdrawal speed determined the amount of liquid left on these totally wetted parts (hydrophilic micro-areas 1).

Turning to figure 4, assuming the contact angle was zero on the wettable hydrophilic micro-areas 1, the maximum droplet size was restricted by the advancing and receding contact angles on the partially wettable parts (hydrophobic zone 2) of the patterned surface 3.

The higher the contact angle was between liquid and solid on the partially wettable hydrophobic zone 2, the lower the minimum droplet radius was.

The maximum droplet contact angle $\theta_c$ was the advancing contact angle onto partial wetting area of the lens surface. If the implemented angle $\theta$ was significantly greater than $\theta_c$, then the droplets D spread on the partial wetting zone 2, which was not desired for the method of the invention.

As visible in figure 8, too high a withdrawal speed resulted in leaving too much liquid on the surface 3, which did not satisfy the above-described criterion for droplet stability. As the critical transition speed can be expressed with the

critical capillary number $C_a^*$ by means of the withdrawal speed:

$$C_a = \frac{\eta U}{\gamma}$$

it follows that the critical transition speed may as expressed below:

$$U^* = \frac{\gamma C_a^*}{\eta}$$

This number compares the viscous dragging force to the surface tension.

Under the critical transition speed U, the partially wettable hydrophobic zone 2 remained dry, no liquid being dragged onto the zone 2 and the contact line was stable, as illustrated in the left drawing of figure 8, which was the only one to represent a well-controlled withdrawal according to the invention.

But above the critical transition speed U, the contact line significantly rose and as a consequence a layer of liquid was undesirably dragged on the surface, as illustrated in the right drawing of figure 8.

Finally, droplets D of the hydrophilic liquid were successfully anchored onto the sole hydrophilic micro-areas 1 corresponding to the highest solid/liquid interfacial energy with the wetting parameter S>0 (total wetting), and the higher the withdrawal speed, the higher the volume and the lower the curvature radius for each droplet D.

**Microstructured surface(s) of an ophthalmic article according to the invention**

In the present description, the microstructured surface(s) which form(s) the front main surface and/or the rear main surface of the ophthalmic substrate 10 provided with the first abrasion-resistant coating include lenslets in the form of micro-lenses, which form bumps separated by recesses at the main surface they are arranged onto. The outline of the lenslets may be round or polygonal, for example circular, elliptic or hexagonal, even though any outline may be contemplated for the droplets D, and the micro-lenses may be spherical, toric, or have an aspherical shape, rotationally symmetrical (i.e. axisymmetric or not), although any shape may also be contemplated for the micro-lenses. Each micro-lens may have a single focus point, or cylindrical power, or non-focusing point.

In the exemplary embodiment of figure 5 which illustrates a case of non-circular boundary for the droplet D and due to capillary forces, the droplet surface adopts a shape that minimizes its air/surface area, i.e. in this example an elliptic outline which defines an hemi-ellipsoidal shape having two different orthogonal radii or curvatures (close to a torical surface if the radii are small enough). This hemi-ellipsoidal shape created two focal points. These outline and shape may be numerically calculated, and this boundary condition may be precisely controlled by the method of the invention.

In preferred embodiments, lenslets or micro-lenses can be used to prevent progression of myopia or hyperopia. In that case, the base lens substrate comprises a base lens providing an optical power for correcting myopia or hyperopia, and the micro-lenses or the lenslets may provide respectively an optical power greater than the optical power of the base lens if the wearer has myopia, or an optical power lower than the optical power of the base lens if the wearer has hyperopia.

Lenslets may have a contour shape being inscribable in a circle having a diameter greater than or equal to 500 $\mu$m and preferably of between 1 mm and 2 mm in case the microlenses are designed for controlling evolution of myopia.

Lenslets may have a height, measured in a direction perpendicular to the main surface they are arranged onto, that is greater than or equal to 0.1 $\mu$m and less than or equal to 50 $\mu$m.

The main surface can be defined as a surface, that can be a plano, spherical, spherocylindrical or even complex surface, that includes the central point of every microstructures. This main surface can be a virtual surface, when microstructures are embedded in the lens or close or identical to the ophthalmic lens physical outer surfaces when microstructures are not embedded. The height of the microstructure can be then determined using local perpendicular axis to this main surface, and calculating for the each point of the microstructure the difference between the maximum positive deviation minus the minimum negative deviation to the main surface, along the axis.

Lenslets may have periodical or pseudo periodical layout, but may also have randomized positions. Exemplary layouts for lenslets may be a grid with constant grid step, honeycomb layout, multiple concentric rings, contiguous e.g. no space in between microstructures.

These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20Diopters, and light deviation is configured such that the structure may locally scatter light with angle ranging from +/- 1° to +/- 30°.

A distance between structures may range from 0 (contiguous) to 3 times the structure (separate microstructures).

As visible in Figure 6, the method of the invention for manufacturing an ophthalmic article for controlling the evolution of myopia, by means of the three-dimensional array of microlenses, used micro-lenses with a diameter d of about 1-2 mm and an optical power of 3 diopters.

The sag (also called "sagitta") of the micro-lenses could be calculated from the well-known equation:

$$SAG=R-\sqrt{(}R^2-(d/2)^2,$$

, where R denotes the radius of Curvature and d the diameter.

The sag was at most a few $\mu$m, and the droplet contact angle was very small : since tan $\theta \sim \theta$ for small angles, $\theta$ was close to few mrad (1mrad ~ 0.06°). This angle was very small, and this factor was found to be non-limiting in practice.

## EXAMPLES FOR IMPLEMENTATION OF METHODS OF THE INVENTION:

The following examples illustrate the present invention in a more detailed, but non-limiting manner.

### Process implemented for the dip coating of surface wettability patterns

As explained above, the surface wettability pattern was immersed into a preferentially low viscosity and high surface tension hydrophilic liquid to limit viscous drag and maximize capillary forces, which restrained the liquid from wetting the partially wettable surface defined by the hydrophobic zone 2 (which repelled the hydrophilic liquid).

Since the volume of each droplet to be obtained was very small, the coating material was indeed diluted to allow good control of the droplets D and resulting micro-lens final volume, after solvent evaporation. The solvent was selected to lower the viscosity of the hydrophilic liquid and to increase its surface tension, thus promoting a very low drag force. In the tested solvent-based hydrophilic coating, the subsequent drying slightly changed the volume of the droplets D which were more flattened (thus inducing a change of curvature radius), which change was easily anticipated.

After a slow withdrawal of the surface wettability pattern from the hydrophilic bath, the withdrawal speed was slightly increased, and the transition withdrawal speed - where no liquid (film or droplet) was drained from the partially wettable surface - was measured. This was done on the not-patterned surface, but preferably the transition withdrawal speed should be measured also on the real surface wettability pattern.

This value of the transition speed was the limiting maximum withdrawal speed of the dip coating process, i.e. a critical transition speed where the liquid started to be anchored onto the sole totally wettable hydrophilic micro-areas 1. The withdrawal speed and dry content of the liquid was thus adjusted, to obtain the desired droplets and micro-lenses height after solvent evaporation and drying/curing. The actual withdrawal speed never exceeded the critical speed thus measured.

The three-dimensional array of micro-lenses obtained in step d) was allowed to dry and could subsequently be cured if needed, for instance by UV radiation or heat.

### Exemplary implementation of steps a), b), c) and d) on this basis

A stencil-type masking film of vinyl having a 90$\mu$m thickness was cut with a pattern of holes representing a 2D view of the array of micro-lenses to be finally obtained (see the photograph of figure 11). The holes had a diameter of between 1 mm and 2 mm in view of the ophthalmic design to be manufactured. Then, the following main steps were implemented.

The masking film was then cold pressed onto a main surface of a curved ophthalmic lenses (see figure 12) consisting of an CR 39® lens substrate provided with a first abrasion-resistant coating defining this main surface which was hydrophobic. The first abrasion-resistant coating used in first and second experiments was as disclosed in example 3 of document FR 2 702 486 A1 (or its equivalent US 2003/165698 A1), and exhibited a Bayer value, measured in accordance with the ASTM F735-81 standard, which was of between 2 and 4.

The low module of the masking film facilitated this pressing operation, even though slight heating with hot air could be used to avoid wrinkles.

A second film was applied onto the other main surface of the ophthalmic substrate opposite the first abrasion-resistant coating, in order to protect the substrate from the subsequent chemical treatment.

The entire lens thus protected was then immersed in a bath of light etching caustic chemicals of NaOH (KOH was alternatively used in another experiment), for a slight chemical etching of the surface of the first abrasion-resistant coating. The lens was then washed and the second film was removed. The purpose of caustic etching was to remove the fluorinated surfactant present on the surface on the first abrasion-resistant coating, and also to create the surface wettability pattern to be achieved in step b) of the method of the invention, with the two-dimensional array of hydrophilic micro-areas 1 obtained

by this caustic etching through the holes of the masking film and the hydrophobic zone 2 (untreated by caustic etching) which connects the micro-areas 1 to each other.

The lens was then immersed in a bath of hydrophilic liquid designed to form the second abrasion-resistant coating, which was almost identical to the formulation of the first abrasion-resistant coating, except that the hydrophilic liquid did not contain any surfactant (whereas the first abrasion-resistant coating comprised a fluorinated surfactant to enhance its wettability on the substrate).

As explained above, the hydrophilic liquid was withdrawn below a critical withdrawal speed from the liquid bath, so that this liquid did not wet the hydrophobic zone 2 and was anchored to the sole hydrophilic micro-areas 1. Afterwards, the three-dimensional array of micro-lenses appeared spontaneously, and was subsequently allowed to dry and harden. The Bayer value of the second abrasion-resistant coating, measured in accordance with the ASTM F735-81 standard, was of between 2 and 4.

Figure 13 shows a photograph of an ophthalmic lens incorporating the three-dimensional array of micro-lenses thus obtained by the method of the invention.

## Claims

**1.** Method for manufacturing an ophthalmic article having a front main surface and a rear main surface, at least one of which is a microstructured surface, the method comprising the following steps:

a) Providing an ophthalmic substrate (10) with a substrate surface which is either hydrophobic or hydrophilic;
b) Patterning the substrate surface to create thereon a surface wettability pattern comprising a two-dimensional array (3) of mutually distant hydrophilic micro-areas (1) and of at least one hydrophobic zone (2) which separates the hydrophilic micro-areas (1) from each other;
c) Coating the two-dimensional array (3) with a hydrophilic liquid which is able to form an abrasion-resistant coating in a dried and/or cured state, to form mutually distant droplets (D) of the hydrophilic liquid which are anchored to the hydrophilic micro-areas (1) by wettability thereof; and
d) Drying and/or curing the mutually distant droplets (D) of the hydrophilic liquid, to generate therefrom a three-dimensional array of micro-lenses forming the at least one microstructured surface.

**2.** Method according to claim 1, wherein step a) comprises rendering the ophthalmic substrate (10), which consists of a mineral material, either hydrophobic or hydrophilic on said substrate surface.

**3.** Method according to claim 1, wherein step a) comprises providing the ophthalmic substrate (10), which consists of an organic material, with a first abrasion-resistant coating which is either hydrophobic or hydrophilic and defines said substrate surface, and wherein preferably in step c) the hydrophilic liquid is selected so that the abrasion-resistant coating forming the micro-lenses, or second abrasion-resistant coating, has a Bayer value greater than or equal to the Bayer value of the first abrasion-resistant coating, both Bayer values being measured in accordance with the ASTM F735-81 standard and being preferably greater than or equal to 2.

**4.** Method according to any of preceding claims, wherein in step c) the hydrophilic liquid is a polar liquid selected from solutions in a polar solvent and emulsions comprising a polar phase.

**5.** Method according to claim 4, wherein in step c) the hydrophilic liquid comprises at least one inorganic oxide of a metal or non-metal selected from colloidal silica, titania, zirconia, antimony oxide and mixtures thereof, and wherein the hydrophilic liquid is selected from polar solutions comprising alcoholic, ketones and/or ester solvents, the hydrophilic liquid comprising an epoxysilane hydrolyzate, the at least one inorganic oxide and a catalytic amount of an aluminum-based curing catalyst.

**6.** Method according to any of preceding claims, wherein step c) is implemented by dip coating, by dipping the ophthalmic substrate (10) provided with the substrate surface once patterned into a bath of the hydrophilic liquid and afterwards by a controlled withdrawal of the dipped ophthalmic substrate (10) from the bath, the withdrawal being controlled so as to obtain a desired curvature radius and/or volume for each of the micro-lenses obtained in step d).

**7.** Method according to claim 6, wherein in the dip coating of step c), a maximum allowable withdrawal speed is determined, by measuring a critical transition speed where no film of the hydrophilic liquid is dragged onto the at least one hydrophobic zone (2) once dipped and withdrawn,
and wherein the controlled withdrawal of the dipped ophthalmic substrate (10) from the bath is implemented at an

adjusted withdrawal speed selected to be lower than or equal to said critical transition speed.

**8.** Method according to claim 6 or 7, wherein steps b) and c) are implemented so that the micro-lenses obtained in step d) have at least one greater transverse direction, such as a diameter, which is greater than 500 μm and preferably of between 1 mm and 2 mm in case the micro-lenses are designed for controlling evolution of myopia when the ophthalmic article is an ophthalmic curved prescription lens.

**9.** Method according to any of preceding claims, wherein

- the ophthalmic substrate (10) consists of a mineral material, or of an organic material which is thermosetting, photocurable or thermoplastic; and wherein
- the method further comprises at least one of steps A) and B):

A) coating the ophthalmic substrate (10) before step a) with a primer coating which is itself provided with said substrate surface, and
B) laminating the ophthalmic substrate provided with the patterned substrate surface on an existing curved lens, by a forming technique implemented by laminating

- between step b) and step c), the ophthalmic substrate (10). provided with said substrate surface patterned according to the surface wettability pattern. (3), or
- after step d), the ophthalmic substrate (10) provided with the patterned substrate surface and the three-dimensional array of micro-lenses.

**10.** Method according to any of preceding claims, wherein the method further comprises the following steps:

e) removing the three-dimensional array of micro-lenses obtained in step d) by dipping in a removing bath and optionally providing said substrate surface with protective masking means, so as to selectively recover the ophthalmic substrate (10) provided with the substrate surface, and
f) implementing the sequence of steps b), c) and d) at least once, to obtain another three-dimensional array of micro-lenses forming the at least one microstructured surface.

**11.** Method according to any of preceding claims, wherein step a) is implemented by using, by way of the ophthalmic substrate (10) provided with said substrate surface, an ophthalmic lens selected from a finished ophthalmic lens and an ophthalmic lens blank optionally edged, preferably an ophthalmic curved prescription lens.

**12.** Method according to any of preceding claims, wherein step b) is implemented by a mask-assisted or maskless technique selected from chemical etching, laser ablation or etching, low pressure or atmospheric plasma or corona etching, UV or ozone etching, Reactive Ion Etching (RIE) and chemical grafting of molecules bearing hydrophilic or hydrophobic functions, to create the hydrophilic micro-areas (1) and the at least one hydrophobic zone (2) on said substrate surface.

**13.** Method according to claim 12, wherein step b) is implemented by a mask-assisted technique by

(i) patterning said substrate surface which is selected to be hydrophobic, preferably by a chemical etching technique assisted with a flexible mask (20) applied under pressure onto the substrate surface, or by
(ii) beforehand providing in step a) the substrate surface with an outer surface which is either already hydrophilic or is rendered hydrophilic between steps a) and b), and creating in step b) the at least one hydrophobic zone (2) via said mask-assisted technique by treating unmasked areas with said molecules bearing hydrophobic functions.

**14.** Method according to claim 13, wherein step a) comprises providing the ophthalmic substrate (10), which consists of an organic material, with a first abrasion-resistant coating which is hydrophobic and defines said substrate surface, wherein step b) is implemented in case (i) by providing the flexible mask (20) with an array of through micro-holes optionally having different shapes and/or dimensions, the through micro-holes preferably having a diameter of between 1 mm and 2 mm, and by immersing the first abrasion-resistant coating in a caustic bath of NaOH or KOH, and wherein in case (ii), the outer surface of the first abrasion-resistant coating is rendered hydrophilic between steps a) and b) by:

- at least one of chemical etching, laser ablation or etching, low pressure or atmospheric plasma or corona

etching, UV or ozone etching and Reactive Ion Etching (RIE), and chemical grafting of molecules bearing hydrophilic functions, or by
- depositing onto the first abrasion-resistant coating a hydrophilic layer comprising at least one inorganic oxide of a metal or non-metal selected from silica, titania, zirconia, antimony oxide and mixtures thereof.

**15.** Ophthalmic article obtained by a method according to any of claims 1-14, wherein the ophthalmic article has a front main surface and a rear main surface, at least one of which is a microstructured surface, and comprises:

- an ophthalmic substrate (10) provided with a patterned substrate surface which is patterned according to a surface wettability pattern (3) comprising mutually distant hydrophilic micro-areas (1) and of at least one hydrophobic zone (2) which separates the hydrophilic micro-areas (1) from each other, and
- a three-dimensional array of micro-lenses which form the at least one microstructured surface and are respectively anchored to the sole hydrophilic micro-areas (1), the micro-lenses being based on an abrasion-resistant coating which coats the patterned substrate surface, and

in case the ophthalmic substrate (10) consists of an organic material, said substrate surface is defined by a first abrasion-resistant coating which is patterned according to said surface wettability pattern (3), said abrasion-resistant coating being a second abrasion-resistant coating which coats the patterned first abrasion-resistant coating and which preferably has a Bayer value greater than or equal to the Bayer value of the first abrasion-resistant coating, both Bayer values being measured in accordance with the ASTM F735-81 standard.

## Patentansprüche

**1.** Verfahren zur Herstellung eines ophthalmischen Gegenstands mit einer vorderen Hauptoberfläche und einer hinteren Hauptoberfläche, von denen wenigstens eine eine mikrostrukturierte Oberfläche ist, wobei das Verfahren die folgenden Schritte umfasst:

a) Bereitstellen eines ophthalmischen Substrats (10) mit einer Substratoberfläche, die entweder hydrophob oder hydrophil ist;
b) Strukturieren der Substratoberfläche, um darauf eine Oberflächenbenetzbarkeitsstruktur zu erzeugen, die eine zweidimensionale Anordnung (3) von voneinander beabstandeten hydrophilen Mikrobereichen (1) und wenigstens einer hydrophoben Zone (2), die die hydrophilen Mikrobereiche (1) voneinander trennt, umfasst;
c) Beschichten der zweidimensionalen Anordnung (3) mit einer hydrophilen Flüssigkeit, die fähig ist, in einem getrockneten und/oder gehärteten Zustand eine abriebfeste Beschichtung zu bilden, um voneinander beabstandete Tröpfchen (D) der hydrophilen Flüssigkeit zu bilden, die durch ihre Benetzbarkeit an den hydrophilen Mikrobereichen (1) verankert sind; und
d) Trocknen und/oder Härten der voneinander beabstandeten Tröpfchen (D) der hydrophilen Flüssigkeit, um daraus eine dreidimensionale Anordnung von Mikrolinsen zu erzeugen, die die wenigstens eine mikrostrukturierte Oberfläche bilden.

**2.** Verfahren nach Anspruch 1, wobei Schritt a) umfasst, das ophthalmische Substrat (10), das aus einem mineralischen Material besteht, an der Substratoberfläche entweder hydrophob oder hydrophil zu machen.

**3.** Verfahren nach Anspruch 1, wobei Schritt a) Versehen des ophthalmischen Substrats (10), das aus einem organischen Material besteht, mit einer ersten abriebfesten Beschichtung umfasst, die entweder hydrophob oder hydrophil ist und die Substratoberfläche definiert, und wobei vorzugsweise bei Schritt c) die hydrophile Flüssigkeit so ausgewählt wird, dass die abriebfeste Beschichtung, die die Mikrolinsen bildet, oder die zweite abriebfeste Beschichtung einen Bayer-Wert von größer als der oder gleich dem Bayer-Wert der ersten abriebfesten Beschichtung aufweist, wobei beide Bayer-Werte gemäß dem Standard ASTM F735-81 gemessen werden und vorzugsweise größer als oder gleich 2 sind.

**4.** Verfahren nach einem der vorstehenden Ansprüche, wobei bei Schritt c) die hydrophile Flüssigkeit eine polare Flüssigkeit ausgewählt aus Lösungen in einem polaren Lösungsmittel und Emulsionen, die eine polare Phase umfassen, ist.

**5.** Verfahren nach Anspruch 4, wobei bei Schritt c) die hydrophile Flüssigkeit wenigstens ein anorganisches Oxid eines Metalls oder Nichtmetalls ausgewählt aus kolloidalem Siliciumdioxid, Titandioxid, Zirkoniumdioxid, Antimonoxid und

Gemischen davon umfasst, und wobei die hydrophile Flüssigkeit ausgewählt ist aus polaren Lösungen umfassend alkoholische, Ketonund/oder Ester-Lösungsmittel, wobei die hydrophile Flüssigkeit ein Epoxysilanhydrolysat, das wenigstens eine anorganische Oxid und eine katalytische Menge eines Härtungskatalysators auf Aluminiumbasis umfasst.

**6.** Verfahren nach einem der vorstehenden Ansprüche, wobei Schritt c) durch Tauchbeschichten ausgeführt wird, indem das ophthalmische Substrat (10), das mit der Substratoberfläche versehen ist, nach dem Strukturieren in ein Bad der hydrophilen Flüssigkeit getaucht und anschließend durch kontrolliertes Entnehmen des eingetauchten ophthalmischen Substrats (10) aus dem Bad entnommen wird, wobei das Entnehmen so gesteuert wird, dass ein gewünschter Krümmungsradius und/oder ein gewünschtes Volumen für jede der bei Schritt d) erhaltenen Mikrolinsen erhalten wird.

**7.** Verfahren nach Anspruch 6, wobei bei der Tauchbeschichtung von Schritt c) eine maximal zulässige Entnahmegeschwindigkeit bestimmt wird, indem eine kritische Übergangsgeschwindigkeit gemessen wird, bei der nach Eintauchen und Entnehmen kein Film der hydrophilen Flüssigkeit auf die wenigstens eine hydrophobe Zone (2) gezogen wird,
und wobei das gesteuerte Entnehmen des eingetauchten ophthalmischen Substrats (10) aus dem Bad mit einer eingestellten Entnahmegeschwindigkeit durchgeführt wird, die so gewählt ist, dass sie kleiner oder gleich der kritischen Übergangsgeschwindigkeit ist.

**8.** Verfahren nach Anspruch 6 oder 7, wobei Schritte b) und c) so ausgeführt werden, dass die bei Schritt d) erhaltenen Mikrolinsen wenigstens eine größere Querabmessung, wie z.B. einen Durchmesser, aufweisen, die größer als 500 μm ist und vorzugsweise zwischen 1 mm und 2 mm beträgt, falls die Mikrolinsen zum Beherrschen von Myopieentwicklung ausgelegt sind, wenn der ophthalmische Gegenstand eine ophthalmisch gekrümmte verordnete Linse ist.

**9.** Verfahren nach einem der vorstehenden Ansprüche, wobei

• das ophthalmische Substrat (10) aus einem mineralischen Material oder aus einem organischen Material, das duroplastisch, lichthärtbar oder thermoplastisch ist, besteht; und wobei
• das Verfahren ferner wenigstens einen der Schritte A) und B) umfasst:

A) Beschichten des ophthalmischen Substrats (10) vor Schritt a) mit einer Grundierungsbeschichtung, die ihrerseits mit der Substratoberfläche versehen ist, und
B) Laminieren des mit der strukturierten Substratoberfläche versehenen ophthalmischen Substrats auf eine bestehende gekrümmte Linse durch ein Formverfahren, ausgeführt durch Laminieren

- zwischen Schritt b) und Schritt c) des ophthalmischen Substrats (10), das mit der gemäß der Oberflächenbenetzbarkeitsstruktur (3) strukturierten Substratoberfläche versehen ist, oder
- nach Schritt d) des ophthalmischen Substrats (10), das mit der strukturierten Substratoberfläche und der dreidimensionalen Anordnung von Mikrolinsen versehen ist.

**10.** Verfahren nach einem der vorstehenden Ansprüche, wobei das Verfahren ferner die folgenden Schritte umfasst:

e) Entfernen der bei Schritt d) erhaltenen dreidimensionalen Anordnung von Mikrolinsen durch Eintauchen in ein Entfernungsbad und gegebenenfalls Versehen der Substratoberfläche mit schützenden Maskierungsmitteln, um das mit der Substratoberfläche versehene ophthalmische Substrat (10) selektiv wiederzuerhalten, und
f) Ausführen der Abfolge von Schritten b), c) und d) wenigstens einmal, um eine weitere dreidimensionale Anordnung von Mikrolinsen zu erhalten, die die wenigstens eine mikrostrukturierte Oberfläche bilden.

**11.** Verfahren nach einem der vorstehenden Ansprüche, wobei Schritt a) unter Verwendung, über das mit der Substratoberfläche versehene ophthalmische Substrat (10), einer ophthalmischen Linse ausgewählt aus einer fertigen ophthalmischen Linse und einem gegebenenfalls randgefassten ophthalmischen Linsenrohling, vorzugsweise einer ophthalmisch gekrümmten verordneten Linse, durchgeführt wird.

**12.** Verfahren nach einem der vorstehenden Ansprüche, wobei Schritt b) durch ein maskenunterstütztes oder maskenfreies Verfahren ausgewählt aus chemischem Ätzen, Laserablation oder -ätzen, Niederdruck- oder atmosphärischem Plasma- oder Coronaätzen, UV- oder Ozonätzen, reaktivem Ionenätzen (RIE) und chemischem Pfropfen von

Molekülen mit hydrophilen oder hydrophoben Funktionen ausgeführt wird, um die hydrophilen Mikrobereiche (1) und die wenigstens eine hydrophobe Zone (2) auf der Substratoberfläche zu erzeugen.

**13.** Verfahren nach Anspruch 12, wobei Schritt b) durch ein maskenunterstütztes Verfahren ausgeführt wird durch

(i) Strukturieren der Substratoberfläche, die als hydrophob ausgewählt ist, vorzugsweise durch ein chemisches Ätzverfahren, unterstützt durch eine flexible Maske (20), die unter Druck auf die Substratoberfläche aufgebracht wird, oder durch
(ii) zuvor bei Schritt a) Versehen der Substratoberfläche mit einer äußeren Oberfläche, die entweder bereits hydrophil ist oder zwischen den Schritten a) und b) hydrophil gemacht wird, und bei Schritt b) Erzeugen der wenigstens einen hydrophoben Zone (2) durch das maskengestützt Verfahren durch Behandeln von maskenfreien Bereichen mit den hydrophoben Funktionen tragenden Molekülen.

**14.** Verfahren nach Anspruch 13, wobei Schritt a) Versehen des ophthalmischen Substrats (10), das aus einem organischen Material besteht, mit einer ersten abriebfesten Beschichtung umfasst, die hydrophob ist und die Substratoberfläche definiert,

wobei Schritt b) in Fall (i) durch Versehen der flexiblen Maske (20) mit einem Anordnung von Mikrodurchgangslöchern, die gegebenenfalls unterschiedliche Formen und/oder Abmessungen aufweisen, wobei die Mikrodurchgangslöcher vorzugsweise einen Durchmesser zwischen 1 mm und 2 mm aufweisen, und Eintauchen der ersten abriebfesten Beschichtung in ein Ätzbad von NaOH oder KOH ausgeführt wird, und
wobei im Fall (ii) die Außenfläche der ersten abriebfesten Beschichtung zwischen Schritten a) und b) hydrophil gemacht wird durch:

- wenigstens eines von chemischem Ätzen, Laserablation oder -ätzen, Niederdruck- oder atmosphärischem Plasma- oder Koronaätzen, UV- oder Ozonätzen und reaktivem Ionenätzen (RIE) und chemischem Pfropfen von Molekülen, die hydrophile Funktionen tragen, oder durch
- Abscheiden einer hydrophilen Schicht auf die erste abriebfeste Beschichtung, die wenigstens ein anorganisches Oxid eines Metalls oder Nichtmetalls ausgewählt aus Siliciumdioxid, Titandioxid, Zirkoniumdioxid, Antimonoxid und Gemischen davon umfasst.

**15.** Ophthalmischer Gegenstand, erhalten durch ein Verfahren nach einem der Ansprüche 1-14, wobei der ophthalmische Gegenstand eine vordere Hauptoberfläche und eine hintere Hauptoberfläche aufweist, von denen wenigstens eine eine mikrostrukturierte Oberfläche ist, und umfasst:

- ein ophthalmisches Substrat (10), das mit einer strukturierten Substratoberfläche versehen ist, die gemäß einem Oberflächenbenetzbarkeitsstruktur (3) strukturiert ist, die voneinander beabstandete hydrophile Mikrobereiche (1) und wenigstens eine hydrophobe Zone (2), die die hydrophilen Mikrobereiche (1) voneinander trennt, umfasst, und
- eine dreidimensionale Anordnung von Mikrolinsen, die die wenigstens eine mikrostrukturierte Oberfläche bilden und jeweils an den einzigen hydrophilen Mikrobereichen (1) verankert sind, wobei die Mikrolinsen auf einer abriebfesten Beschichtung basieren, die die strukturierte Substratoberfläche beschichtet, und

in dem Fall, dass das ophthalmische Substrat (10) aus einem organischen Material besteht, die Substratoberfläche durch eine erste abriebfeste Beschichtung definiert wird, die gemäß der Oberflächenbenetzbarkeitsstruktur (3) strukturiert ist, wobei die abriebfeste Beschichtung eine zweite abriebfeste Beschichtung ist, die die strukturierte erste abriebfeste Beschichtung beschichtet und die vorzugsweise einen Bayer-Wert von größer als der oder gleich dem Bayer-Wert der ersten abriebfesten Beschichtung aufweist, wobei beide Bayer-Werte gemäß dem Standard ASTM F735-81 gemessen werden.

## Revendications

**1.** Procédé de fabrication d'un article ophtalmique ayant une surface principale avant et une surface principale arrière, dont au moins l'une est une surface microstructurée, le procédé comprenant les étapes suivantes :

a) fourniture d'un substrat ophtalmique (10) ayant une surface de substrat qui est soit hydrophobe, soit hydrophile ;

b) structuration de la surface du substrat pour créer sur celui-ci un motif de mouillabilité de surface comprenant un réseau bidimensionnel (3) de microzones hydrophiles (1) distantes l'une de l'autre et d'au moins une zone hydrophobe (2) qui sépare les microzones hydrophiles (1) l'une de l'autre ;
c) revêtement du réseau bidimensionnel (3) par un liquide hydrophile qui est capable de former un revêtement résistant à l'abrasion dans un état séché et/ou durci, pour former des gouttelettes (D) du liquide hydrophile distantes l'une de l'autre qui sont ancrées aux microzones hydrophiles (1) par mouillabilité de celles-ci ; et
d) séchage et/ou durcissement des gouttelettes (D) du liquide hydrophile distantes l'une de l'autre, pour générer à partir de celui-ci un réseau tridimensionnel de microlentilles formant la au moins une surface microstructurée.

**2.** Procédé selon la revendication 1, dans lequel l'étape a) comprend le fait de rendre le substrat ophtalmique (10), qui est constitué d'un matériau minéral, soit hydrophobe, soit hydrophile sur ladite surface de substrat.

**3.** Procédé selon la revendication 1, dans lequel l'étape a) comprend la fourniture au substrat ophtalmique (10), qui est constitué d'un matériau organique, d'un premier revêtement résistant à l'abrasion qui est soit hydrophobe, soit hydrophile et qui définit ladite surface de substrat, et dans lequel de préférence à l'étape c) le liquide hydrophile est sélectionné de sorte que le revêtement résistant à l'abrasion formant les microlentilles, ou deuxième revêtement résistant à l'abrasion, possède une valeur Bayer supérieure ou égale à la valeur Bayer du premier revêtement résistant à l'abrasion, les deux valeurs Bayer étant mesurées selon la norme ASTM F735-81 et étant de préférence supérieures ou égales à 2.

**4.** Procédé selon l'une quelconque des revendications précédentes, dans lequel, dans l'étape c), le liquide hydrophile est un liquide polaire choisi parmi des solutions dans un solvant polaire et des émulsions comprenant une phase polaire.

**5.** Procédé selon la revendication 4, dans lequel dans l'étape c) le liquide hydrophile comprend au moins un oxyde inorganique d'un métal ou non-métal choisi parmi la silice colloïdale, l'oxyde de titane, la zircone, l'oxyde d'antimoine et leurs mélanges, et dans lequel le liquide hydrophile est choisi parmi des solutions polaires comprenant des solvants alcooliques, de type cétones et/ou de type ester, le liquide hydrophile comprenant un hydrolysat d'époxysilane, le au moins un oxyde inorganique et une quantité catalytique d'un catalyseur de durcissement à base d'aluminium.

**6.** Procédé selon l'une quelconque des revendications précédentes, dans lequel l'étape c) est mise en œuvre par revêtement par immersion, par immersion du substrat ophtalmique (10) pourvu de la surface du substrat une fois structurée dans un bain du liquide hydrophile et ensuite par un retrait régulé du substrat ophtalmique immergé (10) hors du bain, le retrait étant régulé de manière à obtenir un rayon et/ou volume de courbure souhaité pour chacune des microlentilles obtenues à l'étape d).

**7.** Procédé selon la revendication 6, dans lequel, dans le revêtement par immersion de l'étape c), une vitesse de retrait maximale admissible est déterminée, en mesurant une vitesse de transition critique dans laquelle aucun film du liquide hydrophile n'est tiré sur l'au moins une zone hydrophobe (2) une fois immergé et retiré, et dans lequel le retrait régulé du substrat ophtalmique immergé (10) hors du bain est mis en œuvre à une vitesse de retrait ajustée choisie inférieure ou égale à ladite vitesse de transition critique.

**8.** Procédé selon la revendication 6 ou 7, dans lequel les étapes b) et c) sont mises en œuvre de sorte que les microlentilles obtenues à l'étape d) possèdent au moins une direction transversale plus grande, telle qu'un diamètre, qui est supérieur à 500 $\mu$m, de préférence compris entre 1 mm et 2 mm, dans le cas où les microlentilles sont conçues pour réguler l'évolution de la myopie lorsque l'article ophtalmique est une lentille incurvée ophtalmique de prescription.

**9.** Procédé selon l'une quelconque des revendications précédentes, dans lequel

• le substrat ophtalmique (10) est constitué d'un matériau minéral, ou d'un matériau organique qui est thermodurcissable, photodurcissable ou thermoplastique ; et dans lequel
• le procédé comprend en outre au moins une des étapes A) et B) :

A) revêtement du substrat ophtalmique (10) avant l'étape a) par un revêtement d'apprêt qui est lui-même pourvu de ladite surface de substrat, et
B) stratification du substrat ophtalmique pourvu de la surface de substrat à motifs sur une lentille incurvée existante, par une technique de mise en forme mise en œuvre par stratification

- entre l'étape b) et l'étape c), le substrat ophtalmique (10) pourvu de ladite surface de substrat structurée selon le motif de mouillabilité de surface (3), ou
- après l'étape d), le substrat ophtalmique (10) pourvu de la surface de substrat à motifs et du réseau tridimensionnel de microlentilles.

**10.** Procédé selon l'une quelconque des revendications précédentes, dans lequel le procédé comprend en outre les étapes suivantes :

e) retrait du réseau tridimensionnel de microlentilles obtenu à l'étape d) par immersion dans un bain de retrait et éventuellement fournir à ladite surface de substrat des moyens de masquage de protection, de sorte à récupérer sélectivement le substrat ophtalmique (10) pourvu de la surface de substrat, et
f) mise en œuvre au moins une fois de la séquence d'étapes b), c) et d), pour obtenir un autre réseau tridimensionnel de microlentilles formant la au moins une surface microstructurée.

**11.** Procédé selon l'une quelconque des revendications précédentes, dans lequel l'étape a) est mise en œuvre en utilisant, comme substrat ophtalmique (10) pourvu de ladite surface de substrat, une lentille ophtalmique choisie parmi une lentille ophtalmique finie et une ébauche de lentille ophtalmique éventuellement détourée, de préférence une lentille incurvée ophtalmique de prescription.

**12.** Procédé selon l'une quelconque des revendications précédentes, dans lequel l'étape b) est mise en œuvre par une technique assistée par un masque ou sans masque choisie parmi la gravure chimique, l'ablation ou gravure laser, la gravure par plasma ou corona atmosphérique ou à basse pression, la gravure par des UV ou de l'ozone, la gravure ionique réactive (RIE) et le greffage chimique de molécules portant des fonctions hydrophiles ou hydrophobes, pour créer les microzones hydrophiles (1) et la au moins une zone hydrophobe (2) sur ladite surface de substrat.

**13.** Procédé selon la revendication 12, dans lequel l'étape b) est mise en œuvre par une technique assistée par un masque par

(i) structuration de ladite surface de substrat choisie pour être hydrophobe, de préférence par une technique de gravure chimique assistée par un masque souple (20) appliqué sous pression sur la surface du substrat, ou par
(ii) fourniture, préalable à l'étape a) à la surface du substrat, d'une surface externe qui est soit déjà hydrophile, soit rendue hydrophile entre les étapes a) et b), et création à l'étape b) de l'au moins une zone hydrophobe (2) par ladite technique assistée par un masque par traitement de zones non masquées par lesdites molécules portant des fonctions hydrophobes.

**14.** Procédé selon la revendication 13, dans lequel l'étape a) comprend la fourniture au substrat ophtalmique (10), qui est constitué d'un matériau organique, d'un premier revêtement résistant à l'abrasion hydrophobe et définissant ladite surface de substrat,
dans lequel l'étape b) est mise en œuvre au cas où (i) en munissant le masque souple (20) d'un réseau de micro-trous traversants ayant éventuellement différentes formes et/ou dimensions, les micro-trous traversants ayant de préférence un diamètre compris entre 1 mm et 2 mm, et en immergeant le premier revêtement résistant à l'abrasion dans un bain caustique de NaOH ou KOH, et dans lequel dans le cas (ii), la surface externe du premier revêtement résistant à l'abrasion est rendue hydrophile entre les étapes a) et b) par :

- au moins l'une parmi la gravure chimique, l'ablation ou gravure laser, la gravure par plasma ou corona atmosphérique ou à basse pression, la gravure par des UV ou de l'ozone et la gravure ionique réactive (RIE), et le greffage chimique de molécules portant des fonctions hydrophiles, ou par
- dépôt sur le premier revêtement résistant à l'abrasion d'une couche hydrophile comprenant au moins un oxyde inorganique d'un métal ou non-métal choisi parmi la silice, l'oxyde de titane, la zircone, l'oxyde d'antimoine et leurs mélanges.

**15.** Article ophtalmique obtenu par un procédé selon l'une quelconque des revendications 1-14, dans lequel l'article ophtalmique présente une surface principale avant et une surface principale arrière, dont au moins l'une est une surface microstructurée, et comprend :

- un substrat ophtalmique (10) pourvu d'une surface de substrat à motifs qui est structurée selon un motif de mouillabilité de surface (3) comprenant des microzones hydrophiles (1) distantes l'une de l'autre et d'au moins une zone hydrophobe (2) qui sépare les microzones hydrophiles (1) l'une de l'autre et

- un réseau tridimensionnel de microlentilles qui forment la au moins une surface microstructurée, et sont respectivement ancrées aux seules microzones hydrophiles (1), les microlentilles étant basées sur un revêtement résistant à l'abrasion qui revêt la surface de substrat à motifs et

dans le cas où le substrat ophtalmique (10) est constitué d'un matériau organique, ladite surface de substrat est définie par un premier revêtement résistant à l'abrasion qui est structuré selon ledit motif de mouillabilité de surface (3), ledit revêtement résistant à l'abrasion étant un deuxième revêtement résistant à l'abrasion qui recouvre le premier revêtement résistant à l'abrasion à motifs et qui présente de préférence une valeur Bayer supérieure ou égale à la valeur Bayer du premier revêtement résistant à l'abrasion, les deux valeurs Bayer étant mesurées selon la norme ASTM F735-81.

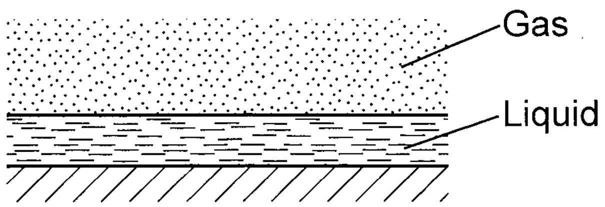


FIG. 1

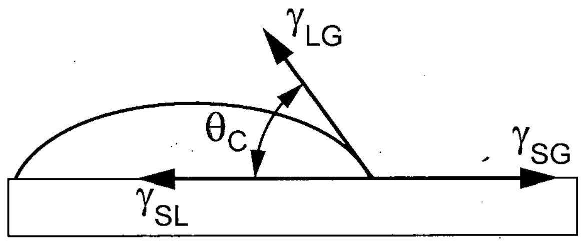


FIG. 2

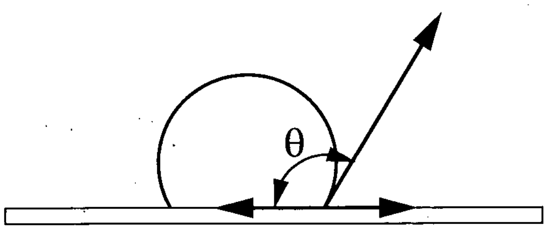


FIG. 3

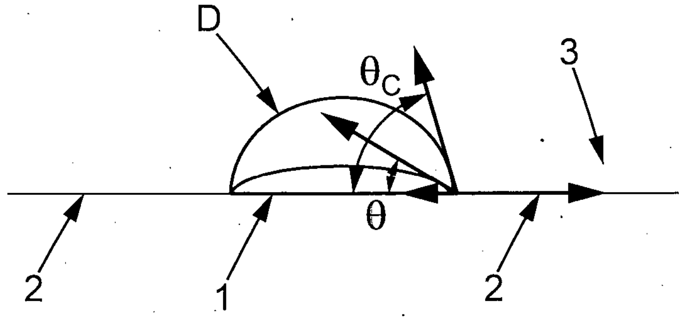


FIG. 4

FIG. 5

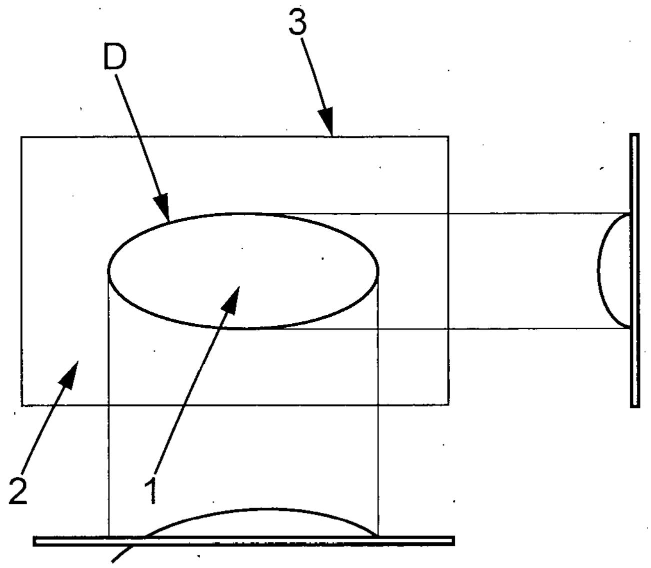


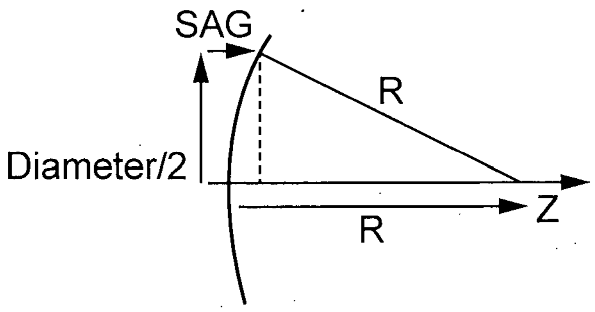


FIG. 6

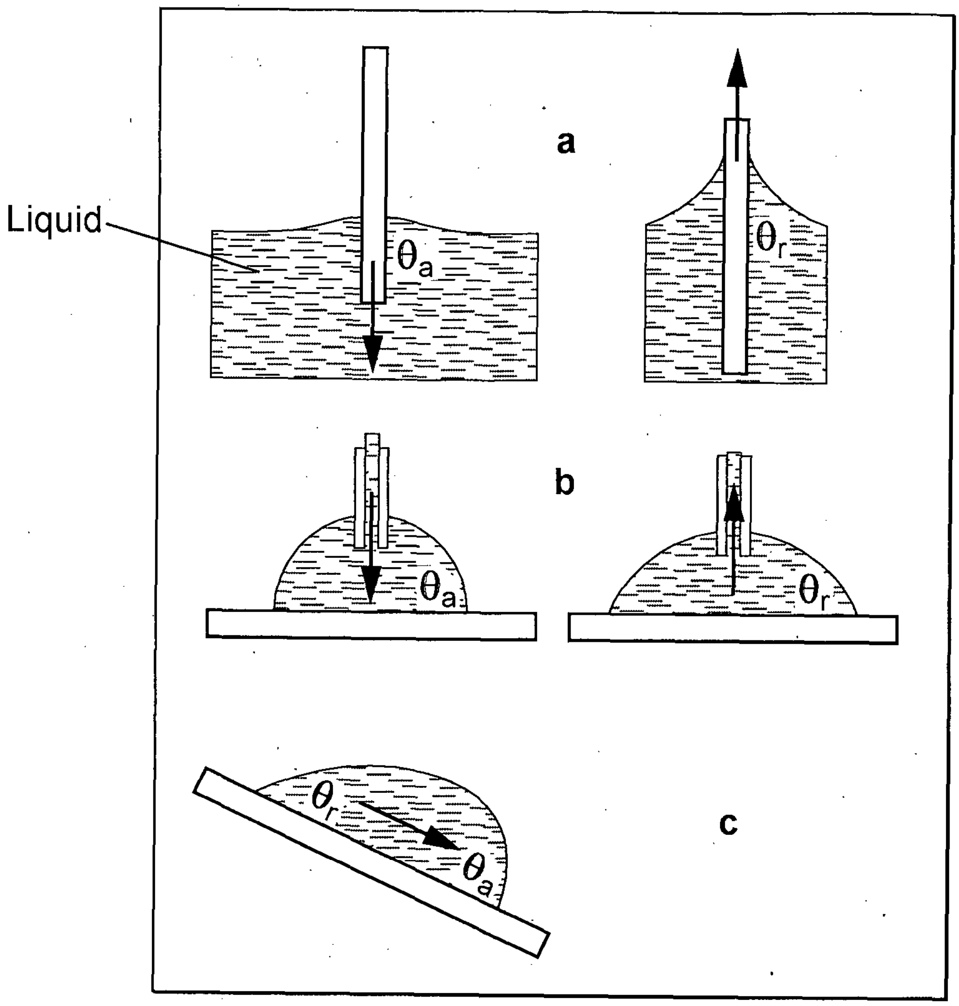
Liquid
a
$\theta_a$
$\theta_r$
b
$\theta_a$
$\theta_r$
c
$\theta_r$
$\theta_a$

FIG. 7

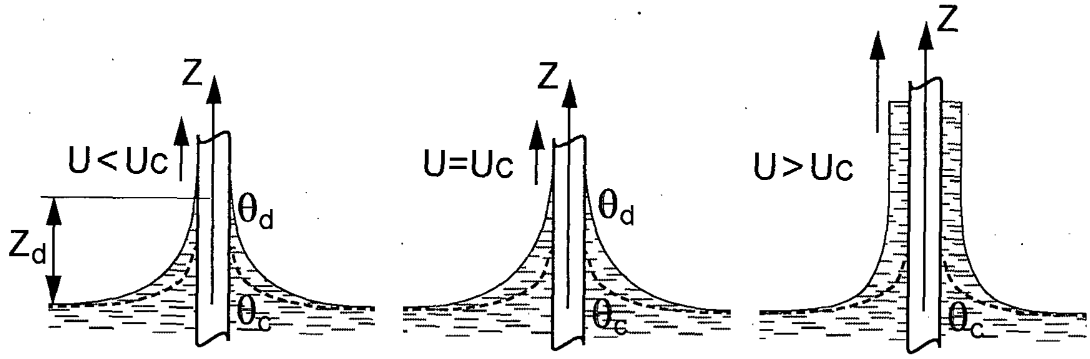
Z
U < Uc
$Z_d$
$\theta_d$
$\theta_c$
Z
U=Uc
$\theta_d$
$\theta_c$
Z
U > Uc
$\theta_c$

FIG. 8

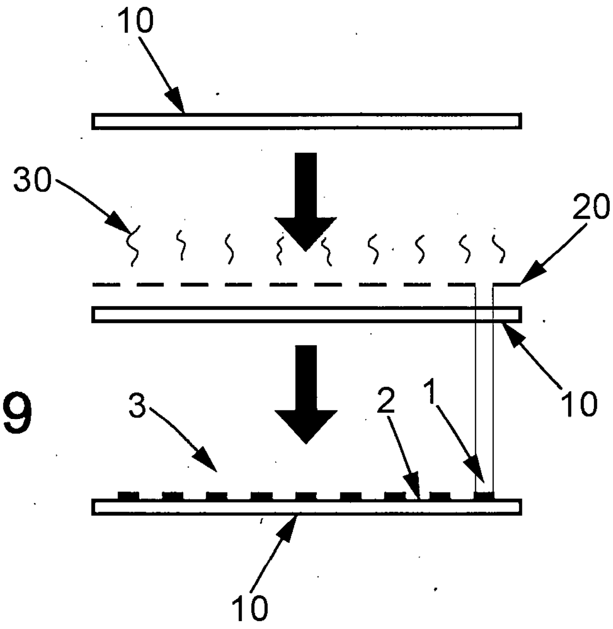


FIG. 9

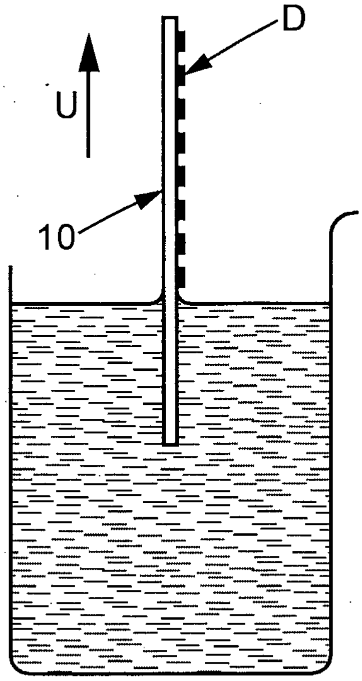


FIG. 10

FIG. 11

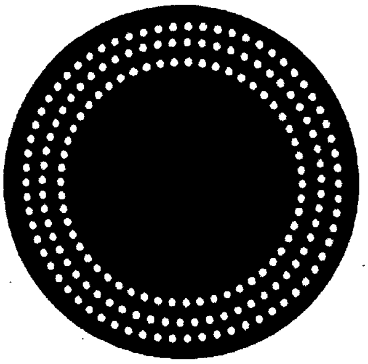

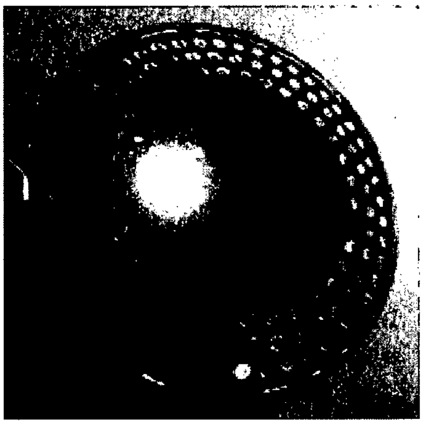

FIG. 12

FIG. 13

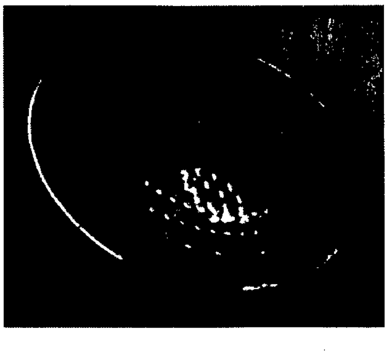

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170131567 A1
- WO 2020078964 A1
- WO 2021209527 A1
- FR 2702486 A1
- US 2003165698 A1


### Non-patent literature cited in the description


- **DANIEL M. HARTMANN** ; **OSMAN KIBAR** ; **SADIK C. ESENER**. Characterization of a polymer microlens fabricated by use of the hydrophobic effect. *OPTICS LETTERS*, 01 July 2000, vol. 25 (13), 975